# EUROPÄISCHE PATENTSCHRIFT

(11) **EP 1 381 787 B1**
(45) Veröffentlichungstag und Bekanntmachung des Hinweises auf die Patenterteilung: **26.07.2006**
(21) Anmeldenummer: 02735192.3
(22) Anmeldetag: 28.03.2002
(51) Int. Cl.: F16C 29/06

(54) **LAGERELEMENT FÜR EINE LINEARFÜHRUNG**
BEARING ELEMENT FOR A LINEAR GUIDE
ELEMENT DE PALIER POUR GLISSIERE LINEAIRE

(30) Priorität: 27.04.2001 DE 10120828
(43) Veröffentlichungstag der Anmeldung: 21.01.2004
(73) Patentinhaber: Schaeffler KG, 91074 Herzogenaurach (DE)
(72) Erfinder: ZERNICKEL, Alexander, 91074 Herzogenaurach (DE)
(86) Internationale Anmeldenummer: PCT/EP2002/003484
(87) Internationale Veröffentlichungsnummer: WO 2002/088558

(56) Entgegenhaltungen:
- DE-A- 3 422 444
- DE-A- 4 318 427
- FR-A- 1 454 315
- US-A- 4 576 422
- US-A- 4 806 022

## Beschreibung

### Gebiet der Erfindung

Die Erfindung betrifft ein Lagerelement für eine Linearwälzführung, bestehend aus einem Tragkörper, in welchem ein geradliniger Kanal für tragende Wälzkörper, ein geradliniger Rücklaufkanal für rücklaufende, lastfreie Wälzkörper und zwei diese Kanäle jeweils miteinander verbindende bogenförmige Umlenkkanäle für umzulenkende Wälzkörper eingearbeitet sind, siehe US-A-4 806 022, die dem Oberbegriff des Anspruchs 1 bzw. Anspruchs 6 entspricht.

Der Einsatz einer kompakten Ausführung eines solchen Lagerelementes ist sowohl im Bereich des allgemeinen Maschinenbaus als auch im Bereich der Kraftfahrzeugtechnik vorstellbar.

Die Druckschrift DE 42 23 499 A1 zeigt ein als Rollenumlaufschuh ausgebildetes Lagerelement, das aus einem massiven Tragkörper besteht. Dieser stützt sich über zylindrische Wälzkörper an einer Laufbahn einer Führungsschiene ab. Die tragenden Wälzkörper sind in einem Kanal des Tragkörpers hintereinander angeordnet, der sich in der Bewegungsrichtung des Tragkörpers erstreckt. Die zylindrischen Wälzkörper oder Rollen bilden einen endlosen Umlauf, wobei in dem massiven Tragkörper ein weiterer, die rücklaufenden Wälzkörper aufnehmender Kanal angeordnet ist. Wegen des großen Werkstoffbedarfs für den massiven Tragkörper ist diese Ausführung jedoch teuer.

### Zusammenfassung der Erfindung

Der Erfindung liegt die Aufgabe zugrunde, eine kostengünstige, kompakte und montagefertige Baueinheit eines Lagerelementes zu schaffen, welche eine weitgehende Toleranzunabhängigkeit bei der Montage und Positionierung in einem Aufnahmegehäuse aufweist.

Diese Aufgabe wird erfindungsgemäß durch die Merkmale des Anspruchs 1 bzw. 6 gelöst, u.u. dadurch, daß der Tragkörper in der Form einer dünnwandigen Gehäusebüchse mit einem darin angeordneten, die Wälzkörper führenden ersten Kunststoffeinsatz ausgeführt ist. Bei einer solchen Ausführung werden keine besonderen Ansprüche an die Gestaltung des Aufnahmegehäuses gestellt. Die Gehäusebüchse kann ein spanlos hergestelltes Bauteil und die Wälzkörper können als Zylinderrollen oder als Zylindernadeln ausgeführt sein. Für ihre mechanische Halterung können die Zylindernadeln mit stirnseitigen Trompetenkuppen versehen sein.

In der Gehäusebüchse kann ein weiterer (zweiter) Kunststoffeinsatz angeordnet sein, wobei sich die Kunststoffeinsätze zu beiden Seiten eines Büchsenbodens befinden. Dabei kann mit dem ersten Kunststoffeinsatz der Rücklaufkanal und mit dem zweiten Kunststoffeinsatz der Kanal für die tragenden Wälzkörper gebildet sein.

Nach Anspruch 6 ist in der Gehausebuchse zusätzlich zu dem ersten Kunststoffeinsatz ein metallischer, die Kanäle für die Wälzkörper bildender Einsatz angeordnet. In einer Ausführung der Erfindung kann der Tragkörper in der Form eines gehärteten Fließpreßteils mit darin angeordneten, die Wälzkörper führenden Kunststoffeinsätzen ausgeführt sein.

### Kurze Beschreibung der Zeichnung

Ausführungsbeispiele der Erfindung sind in der Zeichnung dargestellt und werden im folgenden näher beschrieben. Es zeigen
- Figur 1: einen Längsschnitt durch ein erfindungsgemäßes Lagerelement in einer ersten Ausführungsform;
- Figur 2: eine Draufsicht auf die Gehäusebüchse des Lagerelementes nach Figur 1, jedoch ohne Kunststoffeinsatz;
- Figur 3: einen Längsschnitt durch das Lagerelement gemäß Linie III-III der Figur 1, wobei das Lagerelement in einem Aufnahmegehäuse angeordnet und an einer Führungsschiene abgestützt ist;
- Figur 4: eine Unteransicht eines erfindungsgemäßen Lagerelementes in einer zweiten Ausführungsform;
- Figur 5: einen Längsschnitt durch das Lagerelement nach Figur 4 mit zusätzlich eingezeichneten Federelementen und Zungen;
- Figur 6: den Längsschnitt gemäß Linie VI-VI der Figur 4 durch das Lagerelement, jedoch mit Zwischenstücken zur Führung der Wälzkörper.
- Figur 7: einen Längsschnitt durch ein erfindungsgemäßes Lagerelement in einer dritten Ausführungsform;
- Figur 8: einen Längsschnitt durch ein erfindungsgemäßes Lagerelement in einer vierten Ausführungsform.

### Ausführliche Beschreibung der Zeichnung

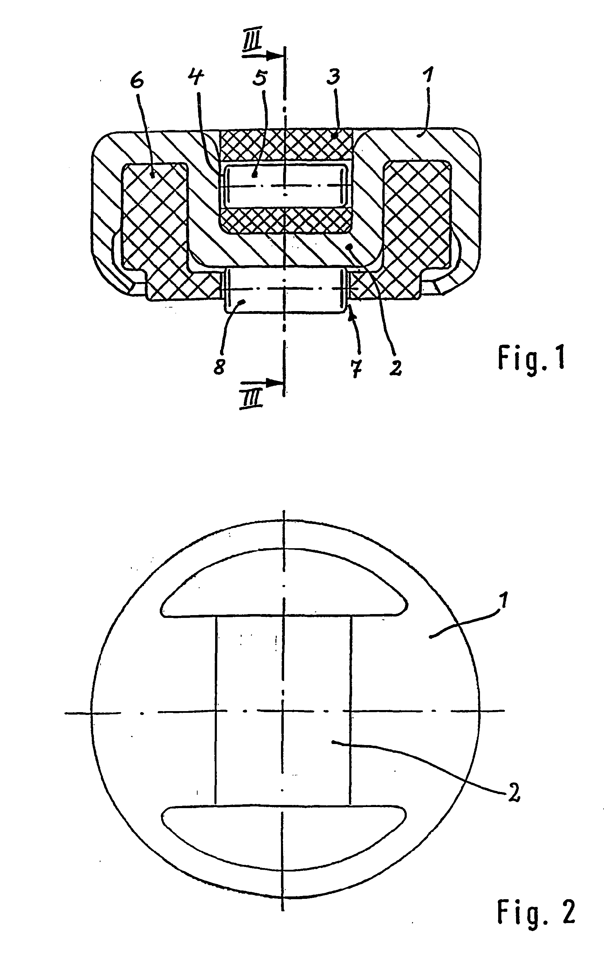

Das in den Figuren 1 bis 3 dargestellte Lagerelement besteht aus einer dünnwandigen, im Querschnitt kreisförmigen Gehäusebüchse 1, in deren Innenraum ein Büchsenboden 2 ausgebildet ist. An einer Seite des Büchsenbodens liegt ein in die Gehäusebüchse 1 eingelegter erster Kunststoffeinsatz 3 an, welcher einen geradlinigen Rücklaufkanal 4 zur Aufnahme rücklaufender Wälzkörper 5 aufweist. Mit einem zweiten Kunststoffeinsatz 6, der ebenfalls in die Gehäusebüchse 1 eingesetzt ist, ist ein geradliniger Kanal 7 für tragende Wälzkörper 8 gebildet, wobei diese Wälzkörper an der anderen Seite des Büchsenbodens 2 anliegen und abrollen können.

Über die tragenden Wälzkörper 8 ist das Lagerelement an der linearen Lauffläche 9 einer Führungsschiene 10 abgestützt und längs dieser verfahrbar. An ihren Enden geht die Reihe der tragenden Wälzkörper 8 jeweils in umzulenkende Wälzkörper 11 über, die in bogenförmigen Umlenkkanälen 12 des ersten Kunststoffeinsatzes 3 angeordnet sind und zu der Reihe der rücklaufenden Wälzkörper 5 in dem Rücklaufkanal 4 führen. Auf diese Weise ist ein endloser Umlauf von Wälzkörpern in dem Lagerelement geschaffen.

Die Wälzkörper sind als Zylinderrollen oder Zylindernadeln ausgebildet. Das Lagerelement ist in einer Bohrung 13 eines Aufnahmegehäuses 14 angeordnet und dort durch verstemmte Bereiche 15 des Aufnahmegehäuses befestigt. Die Gehäusebüchse 1 ist als gehärtete Nadelbüchse das lastaufnehmende Element. Die von dem Büchsenboden 2 gebildete Laufbahn für die tragenden Wälzkörper 8 ist nicht spangebend bearbeitet.

Das Lagerelement wird soweit in die Bohrung 13 des Aufnahmegehäuses 14 eingepreßt, bis es die Kontaktposition zu der linearen Lauffläche 9 erreicht hat. Danach werden die verstemmten Bereiche 15 erzeugt. Die Befestigung des Lagerelementes in dem Aufnahmegehäuse 14 kann auch mit einem Seegerring erfolgen. Durch diese Verfahren ist es möglich, toleranzunabhängig zu arbeiten, wenn man beispielsweise eine Kraft/Weg-Steuerung einsetzt.

Es ist vorteilhaft, die Gehäusebüchse 1. im Querschnitt kreisförmig auszubilden, da diese Form die höchste Stabilität aufweist. Dadurch kann die Gehäusebüchse auch das Aufnahmegehäuse 14 versteifen, was besonders bei dünnwandigen oder Drehmomente übertragenden Aufnahmegehäusen von Bedeutung ist. Ein weiterer Vorteil dieses kompakten Lagerelementes besteht darin, daß es an einer beliebigen Stelle im Aufnahmegehäuse montiert werden kann, beispielsweise überall dort, wo man dafür eine Bohrung anbringen kann.

In der Regel wird zur Unterbringung des Lagerelementes kein zusätzlicher Bauraum benötigt. Je nach der Tragzahl oder Steifigkeit können zur Führung der linearen Lauffläche 9 und des Aufnahmegehäuses 14 relativ zueinander auch mehrere Lagerelemente erforderlich sein. Statt der Kreisform sind auch andere Formen für das Lagergehäuse denkbar, beispielsweise eine Oval-Form oder eine Viereck-Form.

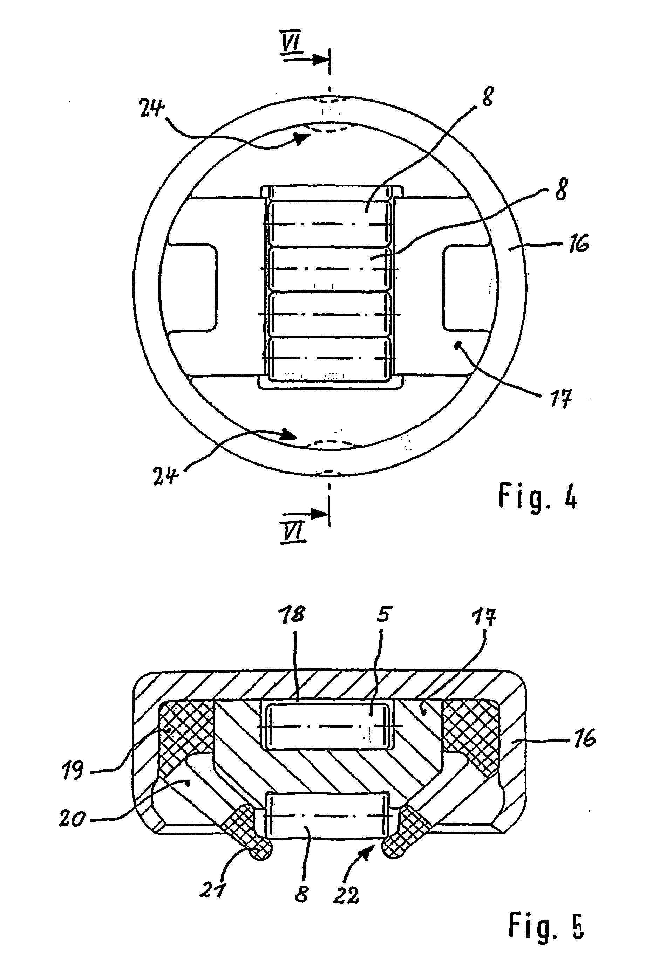

Bei dem in den Figuren 4 bis 6 dargestellten Lagerelement ist die dünnwandige Gehäusebüchse 16 einfacher gestaltet und enthält einen metallischen Einsatz 17, beispielsweise ein Fließpreßteil., durch welches gemeinsam mit dem Boden der Gehäusebüchse 16 ein geradliniger Rücklaufkanal 18 für die rücklaufenden Wälzkörper 5 gebildet ist. Die Gehäusebüchse 16 enthält außerdem einen ersten Kunststoffeinsatz 19. An diesem sind Federn 20 mit Zungen 21 ausgebildet, welche der Halterung der tragenden Wälzkörper 8 dienen. Für die tragenden Wälzkörper weist das Lagerelement einen geradlinigen Kanal 22 auf, der von einem Boden des metallischen Einsatzes 16 und den Zungen 21 gebildet ist. Bei der Halterung der tragenden Wälzkörper 8 tauchen die Zungen 21, welche die Wälzkörper umgreifen, federnd in die Gehäusebüchse 16 ein, sobald das Lagerelement auf der Lauffläche 9 aufliegt. Sie federn wieder heraus, wenn das Lagerelement von der Lauffläche 9 abgehoben wird.

Der Kunststoffeinsatz 19 bildet außerdem gemeinsam mit dem Bodenbereich des metallischen Einsatzes 17 zwei bogenförmige Umlenkkanäle 23 für die umzulenkenden Wälzkörper 11. Zur Orientierung der Gehäusebüchse 16 in dem Aufnahmegehäuse 14 sind in die Gehäusebüchse Vertiefungen 24 eingearbeitet. Die Gehäusebüchse 16 schützt die Wälzkörper und ihre Kanäle vor Verschmutzung. Sie braucht nicht immer ein metallisches Bauteil zu sein, sondern kann auch aus Kunststoff bestehen.

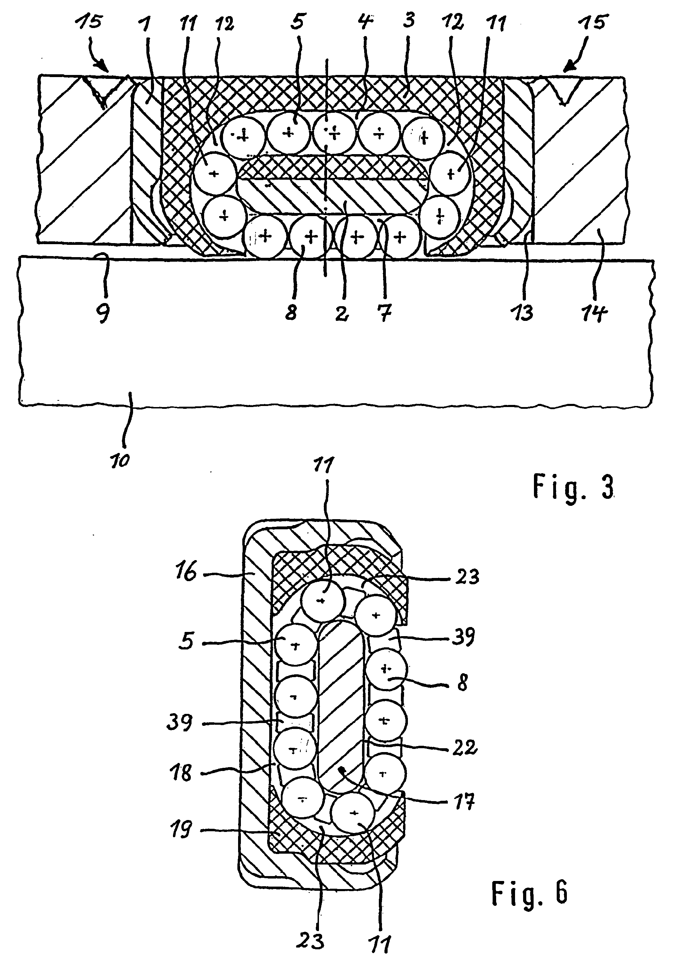

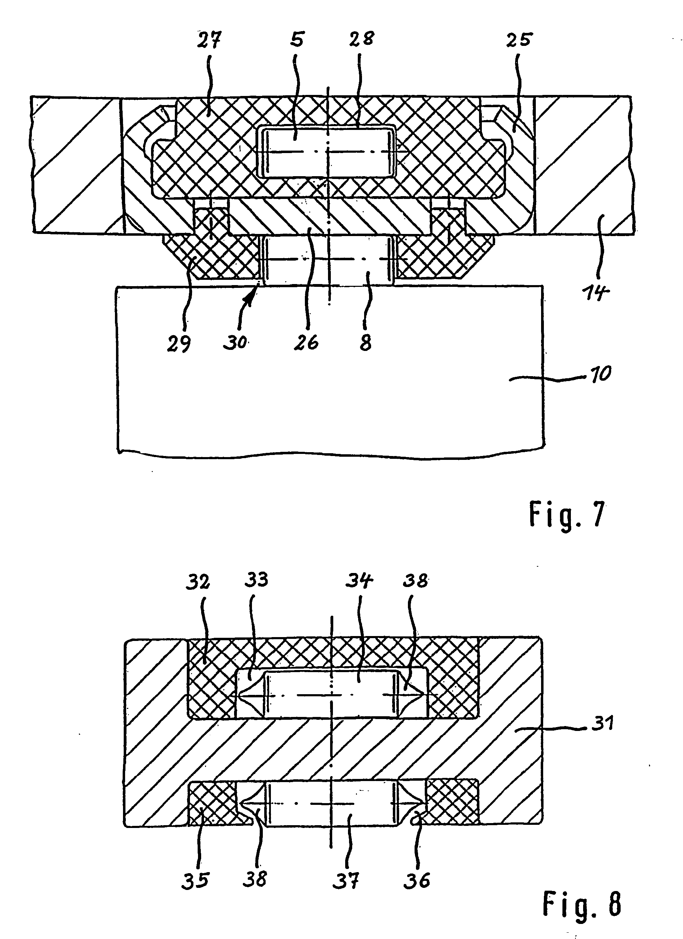

Figur 7 zeigt ein Lagerelement mit einer Gehäusebüchse 25, welche sich gegenüber der Gehäusebüchse 1 nach Figur 3 in umgedrehter Anordnung in dem Aufnahmegehäuse 14 befindet. Hier sind die tragenden Wälzkörper 8 an der Außenseite des Büchsenbodens 26 abgestützt. Diese Ausführung hat den Vorteil eines geringeren Umformgrades bei der Herstellung der Gehäusebüchse 25. Ein erster Kunststoffeinsatz 27 mit einem geradlinigen Rücklaufkanal 28 für die rücklaufenden Wälzkörper 5 befindet sich innerhalb der Gehäusebüchse 25, während einer zweiter Kunststoffeinsatz 29 an der Außenseite des Büchsenbodens 26 anliegend mit Einsteckbereichen in Ausnehmungen der Gehäusebüchse 25 eingesetzt ist. Der zweite Kunststoffeinsatz 29 bildet gemeinsam mit dem Büchsenboden 26 den geradlinigen Kanal 30 für die tragenden Wälzkörper 8.

Figur 8 zeigt, daß statt einer tiefgezogenen, gehärteten Gehäusebüchse auch ein Fließpreßteil 31 verwendet werden kann. Hier bildet ein erster Kunststoffeinsatz 32 den geradlinigen Rücklaufkanal 33 für die rücklaufenden Wälzkörper 34 und ein zweiter Kunststoffeinsatz 35 den geradlinigen Kanal 36 für die tragenden Wälzkörper 37. Alle Wälzkörper sind als Zylindernadeln mit stirnseitigen Trompetenkuppen 38 ausgeführt.

Figur 6 zeigt eine klassische Halterung der Wälzkörper 5, 8 und 11 über Zwischenstücke 39, diese Anordnung erfolgt jedoch auf Kosten der Anzahl der tragenden Wälzkörper.

### Bezugszahlenliste

- 1: Gehäusebüchse
- 2: Büchsenboden
- 3: Erster Kunststoffeinsatz
- 4: Rücklaufkanal
- 5: Rücklaufende Wälzkörper
- 6: Zweiter Kunststoffeinsatz
- 7: Kanal für tragende Wälzkörper
- 8: Tragende Wälzkörper
- 9: Lineare Lauffläche
- 10: Führungsschiene
- 11: Umzulenkende Wälzkörper
- 12: Umlenkkanal
- 13: Bohrung
- 14: Aufnahmegehäuse
- 15: Verstemmter Bereich
- 16: Gehäusebüchse
- 17: Metallischer Einsatz
- 18: Rücklaufkanal
- 19: Erster Kunststoffeinsatz
- 20: Feder
- 21: Zunge
- 22: Kanal für tragende Wälzkörper
- 23: Umlenkkanal
- 24: Vertiefung
- 25: Gehäusebüchse
- 26: Büchsenboden
- 27: Erster Kunststoffeinsatz
- 28: Rücklaufkanal.
- 29: Zweiter Kunststoffeinsatz
- 30: Kanal für tragende Wälzkörper
- 31: Fließpreßteil
- 32: Erster Kunststoffeinsatz
- 33: Rücklaufkanal
- 34: Rücklaufende Wälzkörper
- 35: Zweiter Kunststoffeinsatz
- 36: Kanal für tragende Wälzkörper
- 37: Tragende Wälzkörper
- 38: Trompetenkuppe
- 39: Zwischenstück

## Patentansprüche

1. Lagerelement für eine Linearwälzführung, bestehend aus einem Tragkörper, in welchem ein geradliniger Kanal (7, 30) für tragende Wälzkörper (8), ein geradliniger Rücklaufkanal (4, 28) für rücklaufende, lastfreie Wälzkörper (5) und zwei diese Kanäle jeweils miteinander verbindende bogenförmige Umlenkkanäle (23) für umzulenkende Wälzkörper (11) eingearbeitet sind, wobei der Tragkörper mit einem darin angeordneten, die Wälzkörper (5, 11) führenden ersten Kunststoffeinsatz (3, 27) ausgeführt ist, **dadurch gekennzeichnet, dass** der Tragkörper in Form einer dünnwandigen Gehäusebüchse (1, 25) ausgebildet ist, die einen Gehäuseboden (2, 26) und einen einstückig an den Gehäuseboden (2, 26) anschließenden und um den Gehäuseboden (2, 26) umlaufenden Bord aufweist, wobei der geradlinige Rücklaufkanal (4, 28) zur einen Seite des Gehäusebodens (2, 26) und der geradlinige Kanal (7, 30) für die tragenden Wälzkörper (5) zur anderen Seite des Gehäusebodens (2, 26) angeordnet sind, wobei der Gehäuseboden (2, 26) mit Öffnungen für die bogenförmigen Umlenkkanäle (23) versehen ist.

2. Lagerelement nach Anspruch 1, **dadurch gekennzeichnet, dass** die Wälzkörper (5, 8, 11) Zylinderrollen sind.

3. Lagerelement nach Anspruch 1, **dadurch gekennzeichnet, dass** die Wälzkörper (5, 8, 11) Zylindernadeln sind.

4. Lagerelement nach Anspruch 1, **dadurch gekennzeichnet, dass** in der Gehäusebüchse (1, 25) ein zweiter Kunststoffeinsatz (6, 29) angeordnet ist, wobei sich die Kunststoffeinsätze (3, 27 bzw. 6, 29) zu beiden Seiten eines Büchsenbodens (2, 26) befinden.

5. Lagerelement nach Anspruch 4, **dadurch gekennzeichnet, dass** mit dem ersten Kunststoffeinsatz (3, 27) der Rücklaufikanal (4, 28) und mit dem zweiten Kunststoffeinsatz (6, 29) der Kanal (7, 30) für die tragenden Wälzkörper (8) gebildet ist.

6. Lagerelement für eine Lineannrälzführung, bestehend aus einem Tragkörper, in welchem ein geradliniger Kanal (22) für tragende Wälzkörper (8), ein geradliniger Rücklaufkanal (18) für rücklaufende, lastfreie Wälzkörper (5) und zwei diese Kanäle jeweils miteinander verbindende bogenförmige Umlenkkanäle (12) für umzulenkende Wälzkörper (11) eingearbeitet sind, wobei der Tragkörper mit einem darin angeordneten die Wälzkörper (8) führenden ersten Kunststoffeinsatz (19) ausgeführt ist, **dadurch gekennzeichnet, dass** der Tragkörper in der Form einer dünnwandigen Gehäusebüchse (16) ausgeführt ist, wobei sowohl der lasttragende Kanal (22) als auch die beiden Umlenkkanäle (12) durch den Kunststoffeinsatz (19) und einen zusätzlichen, metallischen Einsatz (17) gebildet sind, und der Rücklaufkanal (18) durch den metallischen Einsatz (17) und dem Boden des Gehäuses (16) gebildet ist.

## Claims

1. Bearing element for a linear roller guide, comprising a support body in which are formed a rectilinear channel (7, 30) for load-bearing roller bodies (8), a rectilinear return channel (4, 28) for returning, unloaded roller bodies (5) and two curved deflection channels (23), which connect said rectilinear channels to one another in each case, for roller bodies (11) to be deflected, the support body being formed with a first plastic insert (3, 27), which guides the roller bodies (5, 11), arranged therein, **characterized in that** the support body is embodied in the form of a thin-walled housing sleeve (1, 25) which has a housing base (2, 26) and a rim which integrally adjoins the housing base (2, 26) and runs around the housing base (2, 26), the rectilinear return channel (4, 28) being arranged at one side of the housing base (2, 26) and the rectilinear channel (7, 30) for the load-bearing roller bodies (8) being arranged at the other side of the housing base (2, 26), the housing base (2, 26) being provided with openings for the curved deflection channels (23).

2. Bearing element according to Claim 1, **characterized in that** the roller bodies (5, 8, 11) are cylindrical rollers.

3. Bearing element according to Claim 1, **characterized in that** the roller bodies (5, 8, 11) are cylindrical needles.

4. Bearing element according to Claim 1, **characterized in that** a second plastic insert (6, 29) is arranged in the housing sleeve (1, 25), the plastic inserts (3, 27 and 6, 29) being respectively arranged at each side of a sleeve base (2, 26).

5. Bearing element according to Claim 4, **characterized in that** the return channel (4, 28) is formed by the first plastic insert (3, 27) and the channel (7, 30) for the load-bearing roller bodies (8) is formed by the second plastic insert (6, 29).

6. Bearing element for a linear roller guide, comprising a support body in which are formed a rectilinear channel (22) for load-bearing roller bodies (8), a rectilinear return channel (18) for returning, unloaded roller bodies (5) and two curved deflection channels (12), which connect said rectilinear channels to one another in each case, for roller bodies (11) to be deflected, the support body being formed with a first plastic insert (19), which guides the roller bodies (8), arranged therein, **characterized in that** the support body is embodied in the form of a thin-walled housing sleeve (16), both the load-bearing channel (22) and the two deflection channels (12) being formed by the plastic insert (19) and an additional metallic insert (17), and the return channel (18) being formed by the metallic insert (17) and the base of the housing (16).

## Revendications

1. Elément de palier pour une glissière de roulement linéaire, se composant d'un corps de support, dans lequel sont usinés un canal rectiligne (7, 30) pour des corps de roulement porteurs (8), un canal de retour rectiligne (4, 28) pour des corps de roulement de retour sans charge (5) et deux canaux de déviation en forme d'arc (23), reliant chacun ces deux canaux l'un à l'autre, pour des corps de roulement à dévier (11), dans lequel le corps de support est réalisé avec un premier insert en plastique (3, 27) disposé dans celui-ci et guidant les corps de roulement (5, 11), **caractérisé en ce que** le corps de support est réalisé sous la forme d'une douille de logement de faible épaisseur (1, 25), qui comporte un fond de logement (2, 26) et un bord raccordé d'un seul tenant au fond de logement (2, 26) et s'étendant autour du fond de logement (2, 26), dans lequel le canal de retour rectiligne (4, 28) est disposé sur un côté du fond de logement (2, 26) et le canal rectiligne (7, 30) pour les corps de roulement porteurs (8) est disposé sur l'autre côté du fond de logement (2, 26), dans lequel le fond de logement (2, 26) est pourvu d'ouvertures pour les canaux de déviation en forme d'arc (23).

2. Elément de palier selon la revendication 1, **caractérisé en ce que** les corps de roulement (5, 8, 11) sont des rouleaux cylindriques.

3. Elément de palier selon la revendication 1, **caractérisé en ce que** les corps de roulement (5, 8, 11) sont des aiguilles cylindriques.

4. Elément de palier selon la revendication 1, **caractérisé en ce qu'**un deuxième insert en plastique (6, 29) est disposé dans la douille de logement (1, 25), dans lequel les inserts en plastique (3, 27 respectivement 6, 29) se trouvent sur les deux côtés d'un fond de logement (2, 26).

5. Elément de palier selon la revendication 4, **caractérisé en ce que** le canal de retour (4, 28) est formé avec le premier insert en plastique (3, 27) et le canal (7, 30) pour les corps de roulement porteurs (8) est formé par le deuxième insert en plastique (6, 29).

6. Elément de palier pour une glissière de roulement linéaire, se composant d'un corps de support, dans lequel sont usinés un canal rectiligne (22) pour des corps de roulement porteurs (8), un canal de retour rectiligne (18) pour des corps de roulement de retour sans charge (5) et deux canaux de déviation en forme d'arc (12), reliant chacun ces deux canaux l'un à l'autre, pour des corps de roulement à dévier (11), dans lequel le corps de support est réalisé avec un premier insert en plastique (19) disposé dans celui-ci et guidant les corps de roulement (8), **caractérisé en ce que** le corps de support est réalisé sous la forme d'une douille de logement de faible épaisseur (16), dans lequel aussi bien le canal porteur de charge (22) que les deux canaux de déviation (12) sont formés par l'insert en plastique (19) et un insert métallique supplémentaire (17) et le canal de retour (18) est formé par l'insert métallique (17) et le fond du logement (16).
